(19) Europäisches Patentamt / European Patent Office / Office européen des brevets

(11) **EP 2 391 695 B1**

(12) **FASCICULE DE BREVET EUROPEEN**

(45) Date de publication et mention de la délivrance du brevet:
**26.06.2013 Bulletin 2013/26**

(21) Numéro de dépôt: **10705901.6**

(22) Date de dépôt: **28.01.2010**

(51) Int Cl.:
*C01B 3/42* (2006.01)  *C01B 3/48* (2006.01)
*C10J 3/72* (2006.01)  *C10J 3/00* (2006.01)

(86) Numéro de dépôt international:
**PCT/FR2010/000069**

(87) Numéro de publication internationale:
**WO 2010/086529 (05.08.2010 Gazette 2010/31)**

(54) **PROCÈDE INTÉGRÉ D'OXYDATION, RÉDUCTION ET GAZÉIFICATION POUR PRODUCTION DE GAZ DE SYNTHÈSE ET D'ÉNERGIE EN BOUCLE CHIMIQUE**

INTEGRIERTES OXIDATIONS-, REDUKTIONS- UND VERGASUNGSVERFAHREN ZUR HERSTELLUNG VON SYNTHESEGAS UND ENERGIE IN EINEM CHEMISCHEN KREISLAUF

INTEGRATED OXIDATION, REDUCTION, AND GASIFICATION METHOD FOR PRODUCING A SYNTHETIC GAS AND ENERGY IN A CHEMICAL LOOP

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.01.2009 FR 0900390**

(43) Date de publication de la demande:
**07.12.2011 Bulletin 2011/49**

(73) Titulaires:
• **IFP**
**92852 Rueil-Malmaison Cédex (FR)**
• **Total S.A.**
**92400 Courbevoie (FR)**

(72) Inventeurs:
• **HOTEIT, Ali**
**F-69003 Lyon (FR)**
• **GUILLOU, Florent**
**F-69007 Lyon (FR)**
• **FORRET, Ann**
**F-69420 Longes (FR)**
• **GAUTHIER, Thierry**
**F-69530 Brignais (FR)**

(56) Documents cités:
**EP-A- 1 933 087      FR-A- 2 850 156**
**US-A1- 2003 029 088**

• **LISBONA P, ROMEO L M: "Enhanced coal gasification heated by unmixed combustion integrated with an hybrid system of SOFC/GT",** INTERNATIONAL JOURNAL OF HYDROGEN ENERGY, vol. 33, 2008, pages 5755-5764, XP002549189, online
• **FAN L ET AL: "Utilization of chemical looping strategy in coal gasification processes",** PARTICUOLOGY,, vol. 6, no. 3, 1 juin 2008 (2008-06-01), pages 131-142, XP022938319, ISSN: 1674-2001 [extrait le 2008-05-22]

EP 2 391 695 B1

## Description

Compte tenu des évolutions climatiques observées ces dernières décennies et de celles prévisibles à long terme, la maîtrise des émissions de gaz à effet de serre devient une exigence de plus en plus forte pour tous les secteurs économiques, et en particulier ceux concernant la production d'énergie. Une des différentes voies possibles pour maîtriser les rejets de gaz à effet de serre à l'atmosphère est le captage et la séquestration du carbone. Cette option est spécialement adaptée dans le cas de l'utilisation centralisée d'énergies fossiles. La plupart des solutions envisagées induisent une pénalité énergétique importante, avec une autoconsommation de l'ordre de 20 à 30%.

Parmi les moyens permettant la capture du $CO_2$ dans les unités de combustion, la boucle chimique, en cours de développement, et que l'on peut classer dans la catégorie des techniques d'oxycombustion, présente l'avantage de produire des fumées de combustion exemptes d'azote venant de l'air de combustion.

Ainsi dans l'hypothèse où le gaz, le solide et le liquide brûlent complètement avec de l'oxygène apporté par des particules comme des oxydes métalliques, les fumées seraient seulement composées de $CO_2$ et de vapeur d'eau, qui, une fois refroidies en dessous de 100°C et débarrassées de l'eau condensée, consisteraient en $CO_2$ pur pouvant être séquestré.

La combustion en boucle chimique (ou en anglais CLC pour Chemical Looping Combustion), présente un potentiel important en terme d'efficacité énergétique et de réduction des coûts. Ce procédé évite la pénalité énergétique liée à la séparation de l'oxygène de l'air. Il repose sur la capacité de transfert d'oxygène de certains matériaux tels que les oxydes métalliques. Un réacteur à air sert à oxyder les transporteurs d'oxygène préparés sous forme de fines particules qui sont alors transférées dans un réacteur à combustible où elles sont réduites par la combustion du combustible. Ce procédé est généralement imaginé et réalisé à l'échelle pilote sous forme de deux lits fluidisés échangeant des flux de solides : le réacteur à air étant alors un réacteur de type fluidisation rapide au sommet duquel le flux d'air appauvri en oxygène et les particules sont séparés par un cyclone, les particules descendant par gravité dans le réacteur à combustible constitué par un lit fluidisé dense, où un débordement réalise la réinjection des solides au bas du riser, tandis que les gaz de combustion composés essentiellement de $CO_2$ et $H_2O$ sont évacués par le ciel de ce lit fluidisé dense. Lorsque la stoechiométrie d'oxygène est en excès par rapport aux besoins requis pour conduire la combustion, la boucle chimique permet d'effectuer une combustion totale du combustible et de produire des fumées contenant essentiellement du $CO_2$ tout en maximisant l'énergie produite. En limitant l'apport d'oxygène, par exemple grâce à un contrôle de la circulation des masses oxydantes, il est également possible de réaliser une combustion partielle du carburant et de produire des fumées constituées au moins en partie d'un mélange CO, H2 qui, après traitement et purification en aval peut servir de charge à des procédés de transformation ou de production d'énergie. Cette combustion partielle limite la production énergétique, mais permet ensuite de valoriser les fumées produites contenant l'hydrogène.

## Art antérieur

Des essais d'intégration de la boucle chimique dans des installations de conversion d'hydrocarbures ont été mis en oeuvre.

Le brevet FR 2 850 156 décrit le principe de la combustion en boucle chimique, dans un procédé dédié à la combustion du charbon.

Le document US 2007/703526 décrit une amélioration de la boucle chimique dans une installation de conversion d'hydrocarbures pétroliers à combustion intégrée permettant la capture de CO2, comportant un réacteur de craquage catalytique en présence des catalyseurs fluidisés et un régénérateur des catalyseurs par combustion de coke déposées sur ces particules. Le régénérateur est un réacteur de réduction d'un support d'oxygène, et est alimenté en combustible solide et/ou également des résidus pétroliers comprenant les catalyseurs pourvus de coke. Le réacteur de réduction est associé à un réacteur d'oxydation. Le support d'oxygène circule entre les deux réacteurs. Le réacteur de réduction est un lit fluidisé circulant, qui est fluidisé par de la vapeur d'eau et/ou du $CO_2$ recyclé et/ou du S02. Ce brevet décrit un procédé avec un agencement de trois réacteurs. Cependant, les masses oxydantes ne circulent qu'entre deux réacteurs et l'objectif est la combustion totale du combustible.

Le document W02007/082089A2 consiste en un procédé en trois étapes, qui met en évidence l'utilisation d'une recirculation des oxydes métalliques pour la production de l'hydrogène. Dans un premier réacteur, une combustion totale du combustible permet de produire CO2, H2O. La production d'hydrogène est réalisée par réoxydation de l'oxyde métallique à l'aide de vapeur d'eau. Cette réalisation impose des débits de vapeur importants et donc la nécessité de chauffer et d'évaporer une quantité importante d'eau avant introduction dans le réacteur d'oxydation, ce qui entraîne des limites au niveau du bilan énergétique.

La production d'hydrogène peut être effectuée par gazéification : la demande de brevet W02008/036902 décrit, par exemple, un procédé de gazéification d'hydrocarbures, qui est mis en oeuvre dans un agencement classique de deux zones réactionnelles. Cependant, un problème auquel est confronté l'homme du métier voulant produire du gaz de synthèse (donc de l'hydrogène) par gazéification est la cinétique des réactions qui ont lieu dans le réacteur de gazéification ainsi que les températures élevées de réactions dans le réacteur gazéification. Le temps de séjour nécessaire des réactifs est donc important. Ceci affecte directement les tailles des installations et plus spécifiquement les tailles des réacteurs mis en jeu, ce qui entraîne des coûts d'investissement élevés.

**Description de l'invention**

La présente invention permet de résoudre la plupart des inconvénients évoqués ci-dessus et propose un procédé intégré optimisé en termes de coût énergétique et d'équipements, pour la production simultanée de gaz de synthèse et d'énergie.

L'invention s'appuie sur la production du gaz de synthèse dans une zone réactionnelle de gazéification située entre le réacteur air (ou zone réactionnelle d'oxydation) et le réacteur fioul (ou zone réactionnelle de réduction), en utilisant la capacité catalytique des oxydes métalliques pour abaisser la température ainsi que l'endothermicité de la gazéification et augmenter la vitesse des réactions favorisant la production d'un mélange H2/CO concentré à la sortie.

Le réacteur air R1 est ici utilisé pour oxyder les oxydes métalliques réduits et fournir de l'énergie, en quantité au moins égale à l'énergie nécessaire à l'activation des réactions de réduction et de gazéification. aucune production de gaz de synthèse ou d'hydrogène n'est réalisée dans ce réacteur.

Les réactions de réduction et de gazéification ont lieu dans deux zones réactionnelles distinctes de la boucle chimique du procédé selon l'invention, respectivement R2 et R3

Par ailleurs, l'utilisation de la capacité catalytique des transporteurs d'oxygène et, plus spécifiquement, des métaux qu'ils contiennent permet d'accélérer la cinétique des réactions qui ont lieu dans le réacteur de gazéification et de réduire les températures de réactions dans le réacteur de gazéification, en diminuant l'énergie d'activation. Le temps de résidence nécessaire des réactifs s'en trouve réduit. Ceci affecte directement les tailles des installations et plus spécifiquement les tailles des réacteurs mis en jeu. La réduction des températures de fonctionnement dans le réacteur de gazéification induit un meilleur bilan énergétique et une réduction des coûts d'investissement du fait de l'abaissement des contraintes thermo-mécaniques sur les matériaux.

**Résumé de l'invention**

L'invention concerne un procédé de production de gaz de synthèse dans au moins une boucle chimique comprenant au moins trois zones réactionnelles distinctes d'oxydation, réduction, gazéification, dans lequel :

a) on effectue l'oxydation des oxydes métalliques réduits MeO1-x dans une zone réactionnelle d'oxydation R1 alimentée par de l'air ;
b) on effectue la combustion d'une charge hydrocarbonée solide et/ou liquide et/ou gazeuse par réduction au moins partielle des oxydes métalliques MeO dans une zone réactionnelle de réduction R2 pour produire un mélange gazeux CO2/H2O ;
c) on effectue la gazéification catalytique d'une charge hydrocarbonée solide et/ou liquide au moyen des oxydes métalliques au moins partiellement réduits issus de R2 dans une zone réactionnelle de gazéification R3 pour produire un gaz de synthèse CO+H2;

et dans lequel l'énergie dégagée par l'oxydation des oxydes métalliques dans la zone réactionnelle d'oxydation R1 permet l'activation des réactions de gazéification et de réduction.

Les deux zones réactionnelles R2 et R3 peuvent être situées dans deux réacteurs distincts, ou être deux zones réactionnelles distinctes dans un même réacteur. L'oxygène 02 nécessaire à la gazéification peut être apporté au moins en partie par les oxydes métalliques lorsqu'ils sont partiellement réduits et/ou par apport du mélange gazeux CO2/H2O venant de la zone réactionnelle de réduction R2.

Dans un mode de réalisation, de l'énergie excédentaire exportable est récupérée par échange de chaleur à l'intérieur des zones réactionnelles ou sur les effluents gazeux.

Dans le cas où la charge alimentant la zone de gazéification R3 est une charge solide, on effectue avantageusement une séparation entre les cendres et les particules d'oxyde métallique issues de la zone de gazéification R3 et on alimente la zone de réduction R1 avec les particules d'oxydes métalliques séparées.

Dans un mode de réalisation, au moins une partie du gaz de synthèse CO+H2 produit dans la zone de gazéification R3 est introduite dans le réacteur de réduction.

Dans une variante du procédé, au moins une partie du gaz de synthèse CO+H2 produit dans la zone de gazéification R3 et au moins une partie de l'eau provenant de la condensation du flux CO2+H2O issu de la zone de combustion R2 alimentent une unité de water gas shift WGS pour produire $CO_2$ + H2.

Dans une autre variante, les gaz produits dans la zone de gazéification sont, après purification, destinés à alimenter au moins en partie une pile à combustible.

Dans une dernière variante, les gaz produits dans la zone de gazéification sont, après purification, destinés à alimenter au moins en partie une unité de synthèse d'hydrocarbures de type Fischer Tropsch ou une unité de synthèse du méthanol ou une unité de synthèse du diméthyléther.

## Description détaillée de l'invention

L'invention concerne un procédé intégré d'oxydation, réduction et gazéification pour production de gaz de synthèse en boucle chimique.

Ce procédé optimisé de combustion en boucle chimique (ou CLC : Chemical Looping Combustion) est adapté à la combustion des hydrocarbures liquides et surtout les résidus lourds et/ou extra-lourds ou bitumeux et intègre une gazéification des combustibles liquides ou solides, ce qui permet la production, simultanée ou non, d'hydrogène (ou de gaz de synthèse) et d'énergie dans la même boucle chimique. La production d'énergie peut être limitée aux besoins énergétiques de la boucle chimique (autosuffisance énergétique), ou excéder ces besoins et permettre une valorisation externe de l'énergie excédentaire produite.

Principe de la combustion en boucle chimique

La combustion par boucle chimique consiste à mettre en contact une charge hydrocarbonée avec un oxyde métallique à haute température. L'oxyde métallique cède alors une partie de l'oxygène qu'il renferme, qui participe à la combustion des hydrocarbures. A l'issue de cette combustion, les fumées contiennent majoritairement des oxydes de carbone, de l'eau et éventuellement de l'hydrogène. En effet, il n'est pas nécessaire de mettre en contact l'air avec l'hydrocarbure et les fumées sont donc majoritairement composées des gaz de combustion et éventuellement d'un gaz de dilution servant au transport et à la fluidisation des particules (par exemple de la vapeur d'eau). Il est donc possible ainsi de produire des fumées exemptes majoritairement d'azote et contenant des teneurs en $CO_2$ élevées (supérieures à 90% en volume) permettant d'envisager le captage, puis le stockage de $CO_2$. L'oxyde métallique ayant participé à la combustion est ensuite transporté vers une autre enceinte réactionnelle où il est mis en contact avec de l'air pour être réoxydé. Si les particules revenant de la zone de combustion sont exemptes de combustible, les gaz issus de cette zone réactionnelle sont majoritairement exempts de $CO_2$ -qui n'est alors présent qu'à l'état de traces, par exemple à des concentrations inférieures à 1 à 2% en volume- et consistent essentiellement en de l'air appauvri en oxygène, suite à l'oxydation des particules métalliques.

Les charges utilisables pour la combustion en boucle chimique sont d'une manière générale les hydrocarbures (gaz naturel, charges pétrolières liquides, préférentiellement les résidus pétroliers caractérisés par le fait que moins de 10% de ces résidus ont leur point d'ébullition dans les conditions atmosphériques au delà de 350°C, ou encore des résidus de conversion, généralement issus des procédés d'hydroconversion ou les asphaltes, résidus du procédé de désasphaltage, ou des charges solides telles que le charbon ou le coke issu des procédés de cokéfaction).

La mise en oeuvre d'un procédé de combustion en boucle chimique requiert des quantités d'oxydes métalliques importantes au contact du combustible. Ces oxydes métalliques sont généralement soit contenus dans des particules de minerai, soit dans des particules résultant de traitements industriels (résidus de l'industrie sidérurgique ou minière, catalyseurs de l'industrie chimique ou du raffinage usagés). On peut également utiliser des matériaux synthétiques tels que par exemple des supports d'alumine ou de silice alumine sur lesquels on aura déposé des métaux qui peuvent être oxydés (oxyde de nickel par exemple).

Les oxydes métalliques utilisables pour réaliser la combustion en boucle chimique sont généralement des oxydes du Fe, Ti, Ni, Cu, Mg, Mn, Co, V, utilisés seuls ou en mélange. Ces métaux peuvent être sous la forme de minerais naturels (comme l'ilménite) ou déposés sur un support synthétique ou sur un catalyseur usagé. De préférence, ces solides sont conditionnés sous la forme de poudre, de diamètre de Sauter compris préférentiellement entre 30 et 500 microns, et de masse volumique de grain comprise entre 1400 et 8000 kg/m3, préférentiellement entre 1400 et 5000 kg/m3.

D'un oxyde métallique à l'autre, la quantité d'oxygène théoriquement disponible varie considérablement et peut atteindre des valeurs élevées voisines de 30%. Selon les matériaux cependant, la capacité maximale d'oxygène réellement disponible n'excède en général pas plus de 20% de l'oxygène présent. La capacité de ces matériaux à céder de l'oxygène n'excède donc au global pas plus de quelques pourcents en poids des particules et varie considérablement d'un oxyde à un autre, généralement de 0,1 à 15%, et souvent entre 0,3 et 13% poids. La mise en oeuvre en lit fluidisé est de ce fait particulièrement avantageuse pour conduire la combustion. En effet, les particules d'oxydes finement divisées circulent plus facilement dans les enceintes réactionnelles de combustion et d'oxydation, et entre ces enceintes, si l'on confère aux particules les propriétés d'un fluide (fluidisation).

Un porteur d'oxygène est caractérisé par sa capacité de transport d'oxygène, c'est à dire la quantité d'oxygène que ce porteur pourra échanger avec le milieu réactionnel entre son état le plus oxydé et celui le moins oxydé de façon réversible. On définit X comme la fraction de la capacité totale de transfert d'oxygène restante dans l'oxyde et $\Delta X$ comme

une fraction de la capacité totale de transfert d'oxygène. Un transporteur d'oxygène est un solide qui, en plus de sa capacité de transporter de l'oxygène, va pouvoir relarguer spontanément son oxygène sous forme gazeuse dans le milieu réactionnel sans que ce dernier soit nécessairement réducteur.

La combustion par boucle chimique permet de produire de l'énergie, sous la forme de vapeur ou d'électricité par exemple. La chaleur de combustion de la charge est similaire à celle rencontrée dans la combustion classique. Celle-ci correspond à la somme des chaleurs de réduction et d'oxydation dans la boucle chimique. La répartition entre les chaleurs de réduction et d'oxydation dépend fortement des oxydes métalliques utilisés pour conduire la combustion par boucle chimique. Dans certains cas, l'exothermicité est répartie entre l'oxydation et la réduction du métal. Dans d'autres cas, l'oxydation est fortement exothermique et la réduction est endothermique. Dans tous les cas, la somme des chaleurs d'oxydation et de réduction est égale à la chaleur de combustion du combustible. La chaleur est extraite par des échangeurs situés à l'intérieur, en paroi ou en appendice des enceintes de combustion et/ou d'oxydation, sur les lignes de fumées, ou sur les lignes de transfert d'oxydes métalliques.

Description générale du procédé intégré selon l'invention

Le procédé intégré selon l'invention permet la production simultanée de gaz de synthèse et d'énergie dans la même boucle chimique.

Le procédé selon l'invention est mis en oeuvre dans au moins une boucle chimique comprenant au moins trois zones réactionnelles distinctes d'oxydation R1, de réduction R2, de gazéification R3.

De manière avantageuse, pour permettre une valorisation énergétique externe, l'énergie dégagée par l'oxydation des oxydes métalliques dans la zone réactionnelle d'oxydation R1 est supérieure aux sommes des énergies nécessaires aux réactions de gazéification et de réduction qui interviennent respectivement dans la zone de gazéification R3 et la zone de réduction R2.

La boucle chimique permettant la mise en oeuvre du procédé selon l'invention comprend trois zones réactionnelles distinctes :

1. au moins une zone réactionnelle d'oxydation R1, alimentée par de l'air, dite réacteur "air", où se déroule la réaction d'oxydation des oxydes métalliques après réduction,
2. au moins une zone réactionnelle de réduction par combustion R2, dite réacteur "fioul" où se déroule la réaction de combustion des charges en présence de l'oxygène présent dans les oxydes métalliques,
3. au moins une zone réactionnelle de gazéification R3, dite "réacteur de gazéification", des charges solides et/ou liquides pour un produire un gaz de synthèse, ladite gazéification étant catalysée par les oxydes métalliques au moins partiellement réduits issus de R2.

Le dispositif de boucle chimique peut comprendre également :

4. un ou plusieurs organes de séparations particules - gaz (cyclone)
5. un ou plusieurs organes d'étanchéité dans les conduits de liaison entre chacun des réacteurs permettant la circulation des oxydes métalliques (tel que par exemple des dispositifs tels que des siphons)
6. dans le cas de la gazéification des combustibles solides au moins un organe de séparation entre les particules d'oxyde métalliques et les particules de nature différente (cendres, imbrûlés) nécessaire entre le réacteur de gazéification et le réacteur air pour éviter un mélange possible de $CO_2$ avec l'azote dans le réacteur air.

Dans une variante du procédé, il est possible d'effectuer la réaction de gazéification et la réaction de réduction dans le même réacteur, dans deux zones réactionnelles distinctes.

Dans le procédé selon l'invention, l'énergie dégagée par l'oxydation du transporteur d'oxygène dans le "réacteur air" R1 est au moins égale aux sommes des énergies nécessaires aux réactions de gazéification et de réduction : ainsi, l'énergie dégagée par l'oxydation du transporteur d'oxygène dans le "réacteur air" R1 permet de fournir l'énergie nécessaire à l'activation des réactions de gazéification (R3) et de réduction (R2), mais également de fournir éventuellement une énergie exploitable tant au niveau du procédé que d'un point de vue production d'énergie vers l'extérieur (chaleur et/ ou électricité).

Dans le cas particulier où l'on apporte du gaz de synthèse dans le réacteur de réduction les réactions dans ce réacteur deviennent exothermiques, favorisant ainsi le bilan énergétique global de la boucle chimique.

**Liste des figures**

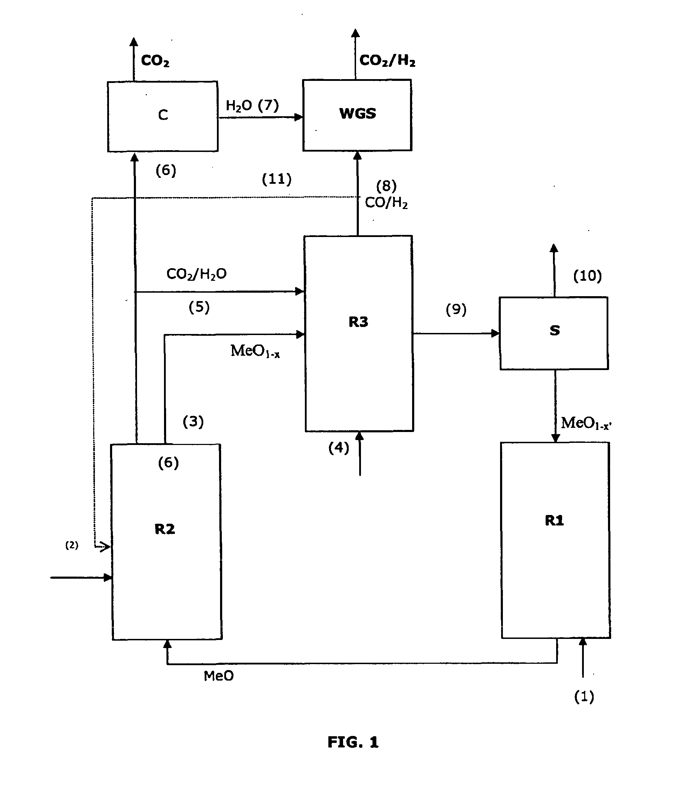

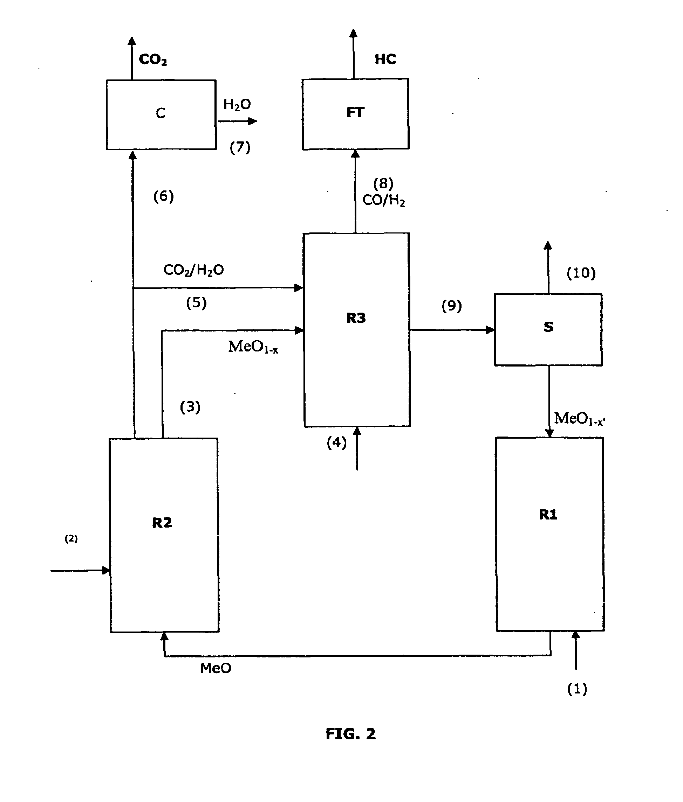

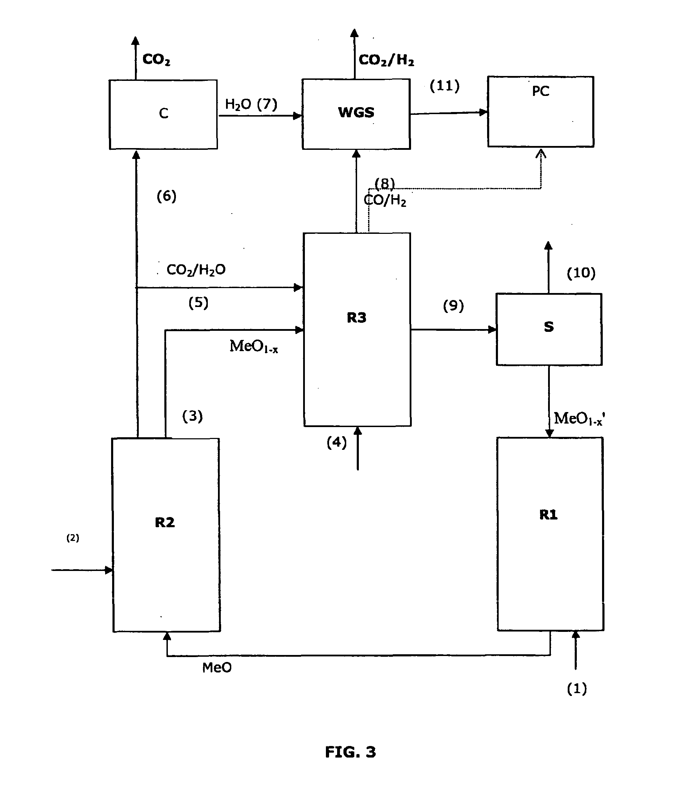

Le procédé de l'invention est illustré à titre non limitatif par les figures 1 à 5.

La figure 1 représente la séquence de circulation de solides entre les zones réactionnelles (dans ce cas constituées par des réacteurs).

Un débit d'oxydes métalliques circule du réacteur d'oxydation (ou "réacteur air") (R1) alimenté en air par une ligne (1) vers le réacteur de réduction (ou "réacteur fioul") (R2) où se déroule la combustion de la charge par réduction des matériaux transporteurs d'oxygène MeO dans leur état d'oxydation maximal, c'est à dire $0,8 \leq X \leq 1$ et de préférence $0,95 \leq X \leq 1$, durant une durée précise allant généralement de 1 à 15 minutes. Les oxydes métalliques en sortie du réacteur de réduction R2 ($MeO_{1-x}$) sont en partie sous forme métallique, avec $0 \leq X \leq 0,5$ et de préférence $0 \leq X \leq 0,1$, après réaction entre l'oxygène existant dans leur structure et le combustible solide et/ou liquide et/ou gazeux arrivant par une ligne (2). Ces formes réduites $MeO_{1-x}$ des oxydes métalliques circulent par une ligne (3) du réacteur fuel (R2) vers le réacteur de gazéification (R3) où une réaction de gazéification d'un combustible solide et/ou liquide arrivant par une ligne (4) a lieu. Cette étape de gazéification est catalysée par les oxydes métalliques sous forme réduite $MeO_{1-x'}$ pour lesquels $0 \leq X \leq 0,5$, et de préférence $0 \leq X \leq 0,1$. Le réacteur de gazéification est alimenté par un gaz oxydant tel que $CO_2$ ou $H_2O$ et/ou un mélange $H_2O,CO_2$ provenant au moins en partie de la réaction de combustion ayant lieu dans le réacteur R2. Le réacteur de gazéification (R3) est ainsi alimenté par une ligne (5) par au moins une partie du $CO_2$, $H_2O$ et/ou du mélange $CO_2/H_2O$ provenant de la cheminée du réacteur de réduction (R2). La partie restante du $CO_2$, $H_2O$ et/ou du mélange $CO_2/H_2O$ est envoyée par une ligne (6) vers un condenseur C afin de séparer le $CO_2$ de l'eau. L'eau ainsi séparée peut ainsi alimenter par une ligne (7) une unité de water gas shift WGS qui permet de produire un mélange CO2/H2 à partir du gaz de synthèse arrivant par une ligne (8) depuis le réacteur R3. A la sortie du réacteur R3, les particules solides sont envoyées par une ligne (10) vers un séparateur S afin de séparer les cendres des oxydes métalliques $MeO_{1-x}$ qui sont envoyés vers le réacteur R1.

Le dispositif peut être complété également par des unités de traitement de soufre sous forme $H_2S$ et/ou $SO_2$ si le combustible contient du soufre ainsi que d'une unité de séparation $CO_2$ - $H_2$. Ces dispositifs ne sont pas représentés sur les figures. En fonction de la destination des gaz issus du procédé, on purifiera les gaz pour désulfurer les fumées en utilisant les procédés connus de l'homme du métier pour atteindre les spécifications requises pour les applications en aval du procédé décrit dans l'invention.

Dans le réacteur dit "réacteur fuel" R2, s'effectue la réduction des matériaux dits "matériaux transporteur d'oxygène" par contact entre les matériaux et le combustible liquide et/ou gaz et/ou solide arrivant par la ligne (2).

Dans le réacteur dit "réacteur de gazéification" R3, s'effectue la gazéification d'un résidu liquide ou solide (à titre d'exemple) qui est valorisé sous forme de gaz de synthèse CO/H2 aux conditions (température, pression, nombre de moles d'eau par mole de combustible) nécessaires à la gazéification et en présence des matériaux $MeO_{1-x}$ réduits qui ont des propriétés catalytiques.

Dans le réacteur dit "réacteur air" R1, les matériaux $MeO_{1-x}$ réduits sont oxydés par l'air, de façon à retrouver leur état le plus oxydé pour lequel $0,8 \leq X \leq 1,0$, et de préférence $0,95 \leq X \leq 1$.

La figure 2 représente une utilisation du procédé selon l'invention dans laquelle le flux (8) issu de R3 est envoyé vers une unité Fischer-Tropsch FT afin de produire un flux hydrocarboné HC. Dans ce cas l'eau issue du condenseur C est évacuée par la ligne (7).

La figure 3 représente une variante du procédé décrit sur la figure 1 dans laquelle une partie du flux issu de l'unité de water gas shift WGS alimente une pile à combustible PC. Éventuellement une partie du gaz de synthèse issu du réacteur R3 par la ligne (8) alimente également la pile à combustible afin de produire de l'électricité et/ou de la chaleur.

La figure 4 représente la configuration dans laquelle la réaction de gazéification et la réaction de réduction sont réalisées dans le même réacteur, dans deux zones réactionnelles distinctes R3 et R2.

Dans cette configuration, la masse oxydante dans sa forme la plus oxydée (12) entre dans la zone de réduction R2 où elle est mise au contact des gaz (19) provenant de la zone R3 contenant au moins en partie un mélange (CO, H2) qui va être oxydé en CO2, H2O. Les masses oxydantes vont par ailleurs parachever la combustion des hydrocarbures issus de la zone R3 présents dans la phase gazeuse (19). Les fumées de R2 sont évacuées par un conduit (16) et contiennent essentiellement de l'eau et du CO2. L'eau peut ensuite être condensée et le $CO_2$ envoyé transporté vers un lieu de stockage après un post-traitement éventuel permettant par exemple de purifier le $CO_2$ en désulfurant les fumées.

Les masses oxydantes de la zone R2 sont alors dirigées vers la zone R3 dans laquelle on effectue la combustion partielle du combustible (4) par les lignes (15) ou (14). Une partie des masses oxydantes peut optionnellement être renvoyée dans le réacteur air (R1).

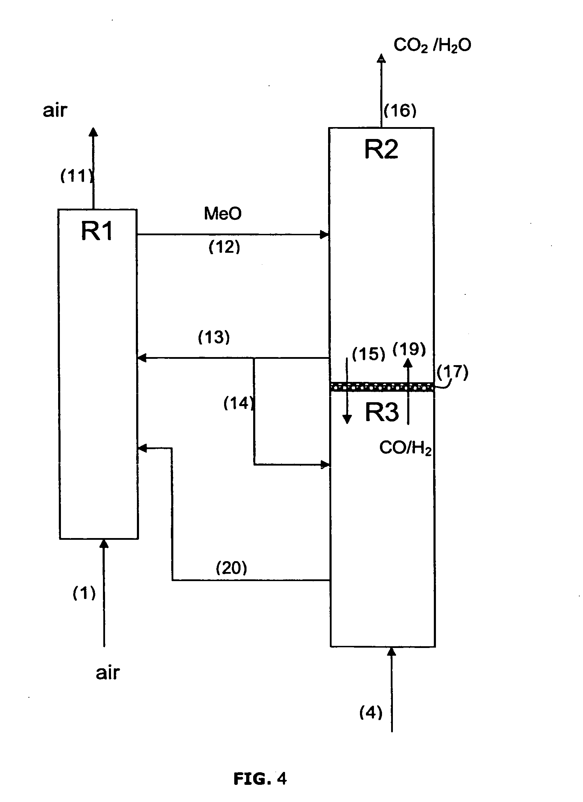

Une des caractéristiques de l'invention consiste à agencer les zones R2 et R3 l'une au-dessus de l'autre. Il est alors possible grâce à des dispositifs particuliers de permettre à tous les gaz issus de R3 de passer dans R2 et aux solides issus de R2 de couler dans R3 pour que le combustible contacte la masse oxydante à contre courant comme représenté sur la figure 4. Ces dispositifs particuliers bien connus de l'homme du métier sont par exemples des internes tels que des plaques perforées ou des chicanes.

Le solide issu de R3 est recyclé vers R1 par la ligne (20).

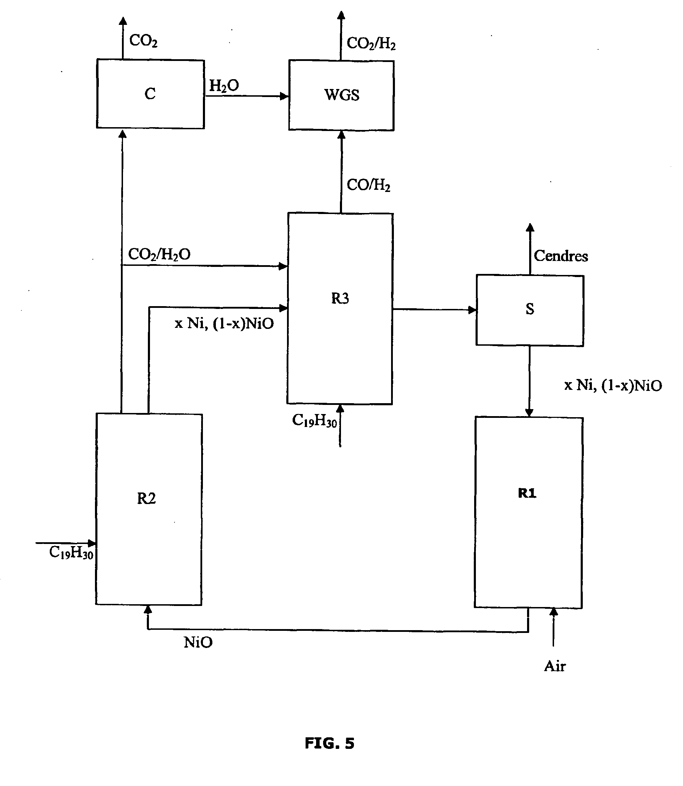

La figure 5 représente le procédé selon l'invention dans la même configuration que la figure 1, dans le cas de l'exemple donné ci-après.

Conditions opératoires

Avantageusement, les réactions dans les réacteurs "air" (R1), fuel (R2) et gazéification (R3) ont lieu à une température comprise entre 700°C et 1200°C, de manière très préférée entre 750 et 950°C.

Le temps de séjour des oxydes métalliques dans le réacteur fuel (R2) dépend de la nature du combustible et peut être estimé de manière générale entre 30 s et 10 minutes, préférentiellement compris entre 1 et 8 minutes.

Le temps de séjour des oxydes métalliques dans le réacteur air (R1) dépend de l'état d'oxydation et/ou réduction de ces oxydes et peut être estimé de manière générale entre 30 s et 10 minutes, préférentiellement compris entre 1 et 3 min.

Le temps de séjour des oxydes métalliques dans le réacteur de gazéification dépend de la nature du combustible à gazéifier et peut être estimé de manière générale entre 1 et 20 minutes, préférentiellement compris entre 1,5 minutes et 10 minutes.

Avantages spécifiques

Plusieurs avantages spécifiques du procédé selon l'invention sont cités ci-dessous, à titre non limitatif.

L'invention permet, grâce à l'utilisation de masses oxydantes en boucle chimique de combiner la production d'énergie et la production d'hydrogène (ou plus généralement de gaz de synthèse) dans la même boucle chimique.

La boucle chimique du procédé selon l'invention permet non seulement de produire l'énergie nécessaire pour la production de gaz de synthèse, mais éventuellement de produire également de l'énergie exploitable sous forme de chaleur et/ou d'électricité.

Par ailleurs, dans un mode de réalisation particulier de l'invention, l'apport optionnel d'une partie du gaz de synthèse produit dans le réacteur de gazéification vers le réacteur de réduction, induit des réactions exothermiques dans ce réacteur, favorisant encore le bilan énergétique global de l'invention (Figure 1, (11)).

Le procédé selon l'invention permet l'utilisation de la capacité catalytique des oxydes métalliques réduits en sortie du réacteur de réduction (R2) dans la réaction de gazéification (R3). La réaction de gazéification est donc catalysée par les oxydes métalliques, sans apport externe de catalyseur.

Par ailleurs, le procédé selon l'invention permet d'injecter directement des charges lourdes en contact avec le transporteur d'oxygène dans le réacteur de réduction ("réacteur fuel" R2).

Le procédé intégré selon l'invention permet enfin d'éviter des temps de séjour des combustibles solides/oxydes métalliques importants dans le réacteur de réduction ("réacteur fuel") qui sont généralement de l'ordre de 15 à 20 minutes. En effet, ces temps de séjour sont importants et impliquent usuellement des réacteurs de tailles importantes.

## EXEMPLE

L'exemple ci-dessous (représenté sur la figure 5) met en oeuvre le principe du fonctionnement sur trois réacteurs distincts de la présente invention tel que représenté sur la figure 1 :

- dans le réacteur dit "réacteur fuel", s'effectue la réduction des matériaux dits "matériaux transporteur d'oxygène" par contact entre les matériaux et un combustible liquide et/ou gaz et/ou solide.
- dans un réacteur distinct, dit "réacteur de gazéifcation", s'effectue la gazéification d'un combustible (un résidu liquide ou solide, à titre d'exemple) qui est valorisé sous forme de gaz de synthèse aux conditions (T et P, nombre de moles d'eau pour 1 mole de combustible) de gazéification et en présence des matériaux réduits qui ont des propriétés catalytiques.
- dans le réacteur dit "réacteur air", les matériaux réduits seront oxydés par l'air.

Dans cet exemple sont calculés un bilan énergétique et un bilan matière représentant le système à l'équilibre énergétique, c'est-à-dire dans une situation où l'énergie dégagée par l'oxydation du transporteur d'oxygène dans le "réacteur air" est suffisante non seulement pour activer les réactions de gazéification et de réduction, mais aussi pour fournir une chaleur exploitable tant au niveau du procédé que d'un point de vue production de chaleur.

Les conditions opératoires considérées à chaque étape sont les suivantes :

## Gazéification

1) la réaction de gazéification est complète : CO et $H_2$ sont les produits uniques de la réaction.

2) les paramètres de fluidisation ne sont pas pris en compte.

3) les réactifs sont des combustibles solides et/ou liquide et la vapeur d'eau.

4) la réaction est endothermique.

## Réduction de l'oxyde métallique

1) la réaction de réduction est complète par rapport au combustible. Les produits de la réaction sont du $CO_2$ et de $H_2O$.

2) L'échange est idéal entre le transporteur d'oxygène et le combustible liquide : il n'y a pas de limitation diffusionnelle, pas de formation de carbone, pas de perte de réactivité.

3) la réaction est endothermique.

## Oxydation de l'oxyde métallique

7. la réaction d'oxydation est complète

8. échange idéal entre le transporteur d'oxygène et l'air

9. la réaction est exothermique

D'une façon plus particulière, le présent exemple considère :

- la combustion du combustible liquide $C_{19}H_{30}$, qui constitue en première approche un cas similaire au fioul domestique;

- le choix de NiO comme transporteur d'oxygène, la réaction complète de réduction est alors :

$$53NiO + C_{19}H_{30} \rightarrow 19CO_2 + 15H_2O + 53Ni$$

- la forme réduite du transporteur d'oxygène comme étant Ni, la réaction complète d'oxydation est alors :

$$Ni + 0,5O_2 \rightarrow NiO$$

- la gazéification est menée à pression atmosphérique.

Le système est considéré comme étant à l'équilibre énergétique, cependant le système a un caractère dynamique puisque le transporteur d'oxygène solide circule en continu entre les différents réacteurs du système. Dans les calculs, on s'intéresse à l'évolution des propriétés de la quantité de transporteur d'oxygène solide nécessaire à la conversion de 100 $Nm^3/h$ de charge liquide $C_{19}H_{30}$ vaporisée.

Valeurs numériques :

| Chaleur de formation | kJ.mol$^{-1}$ |
|---|---|
| $\Delta H_f (H_2O)$ | -241,6 |
| $\Delta H_f (CO_2)$ | -393,12 |
| $\Delta H_f (CO)$ | -110,5 |
| $\Delta H_f (H_2)$ | 0 |
| $\Delta H_f (O_2)$ | 0 |
| $\Delta H_f (NiO)$ | -240 |
| $\Delta H_f (C_{19}H_{30})$ | -640 |

**Dans le réacteur fuel**

$$53NiO + C_{19}H_{30} \rightarrow 19CO_2 + 15H_2O + 53Ni$$

$\Delta H_r(fuel) = 2266$ kJ/mol$_{C19H30}$ = 52,7 kJ/mol$_{NIO}$

Calcul de la quantité de solide $\dot{m}_{NiO}$ requise pour convertir 100 $Nm^3/h$ de combustible vaporisé :

dans les conditions stoechiométriques (C/O=0.36)

$$\dot{n}_{NiO} = 53\,\dot{n}_{C_{19}H_{30}} = 237\,kmol.h^{-1}$$

$$\dot{n}_O = \dot{n}_{NiO} = 237\,kmol.h^{-1}\ soit\ \dot{m}_O = M_O.\dot{n}_O = 3{,}792\,t.h^{-1}$$

$\dot{m}_i$ le flux massique du composé i
$\dot{n}_i$ le flux massique du composé i
$M_i$ la masse molaire du composé i

Avec un RoDX (masse d'oxygène mobilisable par gramme de catalyseur) de 0.01 gO/gNiO.

$$\dot{m}_{NiO_{total}} = \frac{\dot{m}_O}{RoDX} = 379{,}2\,t.h^{-1}$$

puissance nécessaire à la conversion des 100 Nm$^3$/h

$$P_{fuel} = \dot{n}_{C_{19}H_{30}}.\Delta H_r\left(fuel\right)_{C_{19}H_{30}} = 2{,}81\,MW$$

**Dans le réacteur de gazéification :**

$$19H_2O + C_{19}H_{30} \rightarrow 19CO + 34H_2$$

$\Delta H_r$(gazéification) = 3130 kJ/mol$_{C19H30}$
puissance nécessaire à la conversion de 50 Nm$^3$/h

$$P_{gaz} = \dot{n}_{C_{19}H_{30}}.\Delta H_r\left(gaz\acute{e}ification\right)_{C_{19}H_{30}} = 1.94\,MW$$

Cette valeur ne prend pas en compte l'activité catalytique du solide et représente une estimation haute de l'énergie nécessaire à la gazéification.
**Dans le réacteur air :**

$$Ni + 0{,}5O_2 \rightarrow NiO$$

$\Delta H_r$(oxydation) = -240 kJ/mol$_{Ni}$
puissance fournie par la régénération de 65,7 mol/s de catalyseur par oxydation :

$$P_{air} = \dot{n}_{Ni}.\Delta H_r\left(oxydation\right)_{Ni} = -15{,}8\,MW$$

**Bilan :**

Le calcul ainsi détaillé (voir ci-dessus) permet d'établir un bilan énergétique des réactions qui ont lieu dans les différents réacteurs de l'invention. Ce bilan ne tient compte que des chaleurs de réactions. Le bilan global tenant compte des chaleurs nécessaires pour chauffer les réactifs ainsi que de la chaleur récupérable sur les fluides en sortie des réacteurs mis en jeu, soit:

P = - 6,7 $MW_{th}$ pour une quantité de solide circulant de 379,2 t/h.

soit un rendement thermique de 25% (hors valorisation de l'H2 et du CO), calcul de rendement basé sur le PCI du fuel domestique (26,8 MW). La production d'hydrogène en parallèle est de 152 kg/h. Le différentiel de température entre la température du solide oxydé sortant du réacteur d'oxydation et la température du solide qui y entre partiellement réduit après utilisation de la chaleur est de l'ordre de 70°C pour une température maximale de l'ordre de 1100°C.

## Revendications

1.  Procédé de production de gaz de synthèse dans au moins une boucle chimique comprenant au moins trois zones réactionnelles distinctes d'oxydation, réduction, gazéification, dans lequel :

    1. on effectue l'oxydation des oxydes métalliques réduits MeO1-x dans une zone réactionnelle d'oxydation R1 alimentée par de l'air ;
    2. on effectue la combustion d'une charge hydrocarbonée solide et/ou liquide et/ou gazeuse par réduction au moins partielle des oxydes métalliques MeO dans une zone réactionnelle de réduction R2 pour produire un mélange gazeux CO2/H2O ;
    3. on effectue la gazéification catalytique d'une charge hydrocarbonée solide et/ou liquide au moyen des oxydes métalliques au moins partiellement réduits issus de R2 dans une zone réactionnelle de gazéification R3 pour produire un gaz de synthèse CO+H2;
    et dans lequel l'énergie dégagée par l'oxydation des oxydes métalliques dans la zone réactionnelle d'oxydation R1 permet l'activation des réactions de gazéification et de réduction.

2.  Procédé selon la revendication 1 dans lequel les deux zones réactionnelles R2 et R3 sont situées dans deux réacteurs distincts.

3.  Procédé selon la revendication 1 dans lequel les deux zones réactionnelles R2 et R3 sont deux zones réactionnelles distinctes dans un même réacteur.

4.  Procédé selon l'une des revendications précédentes dans lequel l'oxygène 02 nécessaire à la gazéification est apporté au moins en partie par les oxydes métalliques lorsqu'ils sont partiellement réduits et/ou par apport du mélange gazeux CO2/H2O venant de la zone réactionnelle de réduction R2 .

5.  Procédé selon l'une des revendications précédentes dans lequel de l'énergie excédentaire exportable est récupérée par échange de chaleur à l'intérieur des zones réactionnelles ou sur les effluents gazeux.

6.  Procédé selon l'une des revendications précédentes où, dans le cas où la charge alimentant la zone de gazéification R3 est une charge solide, on effectue une séparation entre les cendres et les particules d'oxyde métallique issues de la zone de gazéification R3 et on alimente la zone de réduction R1 avec les particules d'oxydes métalliques séparées.

7.  Procédé selon l'une des revendications précédentes où au moins une partie du gaz de synthèse CO+H2 produit dans la zone de gazéification R3 est introduite dans le réacteur de réduction.

8.  Procédé selon l'une des revendications précédentes où au moins une partie du gaz de synthèse CO+H2 produit dans la zone de gazéification R3 et au moins une partie de l'eau provenant de la condensation du flux CO2+H2O issu de la zone de combustion R2 alimentent une unité de water gas shift WGS pour produire CO2 + H2.

9.  Utilisation du procédé selon l'une des revendications 1 à 8 selon laquelle les gaz produits dans la zone de gazéification sont, après purification, destinés à alimenter au moins en partie une pile à combustible.

10. Utilisation du procédé selon l'une des revendications 1 à 8 selon laquelle les gaz produits dans la zone de gazéification sont, après purification, destinés à alimenter au moins en partie une unité de synthèse d'hydrocarbures de type Fischer Tropsch ou une unité de synthèse du méthanol ou une unité de synthèse du diméthyléther.

## Patentansprüche

1.  Verfahren zur Herstellung von Synthesegas in wenigstens einem chemischen Kreisprozess, der wenigstens drei unterschiedliche Reaktionszonen von Oxidation, Reduktion und Vergasung umfasst, wobei:

1. die Oxidation von reduzierten Metalloxiden Me01-x in einer Reaktionszone der Oxidation R1 durchgeführt wird, die mit Luft versorgt wird;
2. die Verbrennung einer festen und/oder flüssigen und/oder gasförmigen Kohlenwasserstoffcharge durch wenigstens teilweise Reduktion von Metalloxiden MeO in einer Reaktionszone der Reduktion R2 durchgeführt wird, um ein gasförmiges Gemisch CO2/H2O zu erzeugen;
3. die katalytische Vergasung einer festen und/oder flüssigen Kohlenwasserstoffcharge mittels wenigstens teilweise reduzierter Metalloxide, die aus R2 stammen, in einer Reaktionszone der Vergasung R3 durchgeführt wird, um ein Synthesegas CO+H2 zu erzeugen;
und wobei die durch die Oxidation der Metalloxide in der Reaktionszone der Oxidation R1 freigesetzte Energie die Aktivierung der Reaktionen der Vergasung und der Reduktion gestattet.

**2.** Verfahren nach Anspruch 1, wobei sich die beiden Reaktionszonen R2 und R3 in zwei verschiedenen Reaktoren befinden.

**3.** Verfahren nach Anspruch 1, wobei die beiden Reaktionszonen R2 und R3 zwei verschiedene Reaktionszonen im selben Reaktor sind.

**4.** Verfahren nach einem der vorherigen Ansprüche, wobei der zur Vergasung benötigte Sauerstoff 02 wenigstens teilweise durch die Metalloxide bereitgestellt wird, wenn sie teilweise reduziert sind und/oder durch Zufuhr des gasförmigen Gemischs CO2/H2O, das aus der Reaktionszone der Reduktion R2 kommt.

**5.** Verfahren nach einem der vorherigen Ansprüche, wobei die abführbare überschüssige Energie durch Wärmeaustausch im Inneren der Reaktionszonen oder über die Abgase wiedergewonnen wird.

**6.** Verfahren nach einem der vorherigen Ansprüche bei dem, falls die die Vergasungszone R3 versorgende Charge eine feste Charge ist, eine Trennung der Aschen und der aus der Vergasungszone R3 stammenden Metalloxidteilchen durchgeführt wird und die Reaktionszone der Reduktion R1 mit den abgetrennten Metalloxidteilchen versorgt wird.

**7.** Verfahren nach einem der vorherigen Ansprüche, bei dem wenigstens ein Teil des in der Reaktionszone der Vergasung R3 erzeugten Synthesegases CO+H2 in den Reaktor der Reduktion eingespeist wird.

**8.** Verfahren nach einem der vorherigen Ansprüche, bei dem wenigstens ein Teil des in der Reaktionszone der Vergasung R3 erzeugten Synthesegases CO+H2 und wenigstens ein Teil des Wassers, das aus der Kondensation des aus der Verbrennungszone R2 stammenden CO2+H2O Flusses hervorgeht, eine Water Gas Shift WGS-Einheit zur Erzeugung von CO2 + H2 versorgen.

**9.** Verwendung des Verfahrens nach einem der Ansprüche 1 bis 8, gemäß derer die in der Vergasungszone erzeugten Gase nach der Aufreinigung zur wenigstens teilweisen Versorgung einer Brennstoffzelle bestimmt sind.

**10.** Verwendung des Verfahrens nach einem der Ansprüche 1 bis 8, gemäß derer die in der Vergasungszone erzeugten Gase nach der Aufreinigung zur wenigstens teilweisen Versorgung einer Einheit zur Synthese von Kohlenwasserstoffen des Fischer Tropsch-Typs oder einer Einheit zur Synthese von Methanol oder einer Einheit zur Synthese von Dimethylether bestimmt sind.

**Claims**

**1.** A method of producing syngas in at least one chemical loop comprising at least three distinct oxidation, reduction, gasification reaction zones, comprising:

1. carrying out oxidation of the reduced metallic oxides MeO1-x in an air-supplied oxidation reaction zone R1 ;
2. carrying out combustion of a solid and/or liquid and/or gaseous hydrocarbon feed through at least partial reduction of the metallic oxides MeO in a reduction reaction zone R2 so as to produce a gaseous $CO_2/H_2O$ mixture ;
3. carrying out catalytic gasification of a solid and/or liquid hydrocarbon feed by means of the at least partly reduced metallic oxides from R2 in a gasification reaction zone R3 so as to produce a CO + $H_2$ syngas ; and wherein the energy released through oxidation of the metallic oxides in oxidation reaction zone R1 allows the gasification and reduction reactions to be activated.

2. A method as claimed in claim 1, wherein the two reaction zones R2 and R3 are located in two distinct reactors.

3. A method as claimed in claim 1, wherein the two reaction zones R2 and R3 are two distinct reaction zones in a single reactor.

4. A method as claimed in any one of the previous claims, wherein the oxygen $O_2$ required for gasification is provided at least partly by the metallic oxides when they are partly reduced and/or by the $CO_2/H_2O$ gaseous mixture from reduction reaction zone R2.

5. A method as claimed in any one of the previous claims, wherein the exportable excess energy is recovered by heat exchange within the reaction zones or on the gaseous effluents.

6. A method as claimed in any one of the previous claims wherein, in cases where the feed supplying gasification zone R3 is a solid feed, separation is performed between the ashes and the metallic oxide particles from gasification zone R3, and reduction zone R1 is supplied with the separated metallic oxide particles.

7. A method as claimed in any one of the previous claims, wherein at least part of the CO + $H_2$ syngas produced in gasification zone R3 is fed into the reduction reactor.

8. A method as claimed in any one of the previous claims, wherein at least part of the CO + $H_2$ syngas produced in gasification zone R3 and at least part of the water resulting from the condensation of the $CO_2$ + $H_2O$ stream from combustion zone R2 supply a water gas shift unit WGS in order to produce $CO_2$ + $H_2$.

9. Use of the method as claimed in any one of claims 1 to 8, wherein the gases produced in the gasification zone are, after purification, intended to be fed at least partly into a fuel cell.

10. Use of the method as claimed in any one of claims I to 8, wherein the gases produced in the gasification zone are, after purification, intended to be fed at least partly into a Fischer-Tropsch type hydrocarbon synthesis unit or a methanol synthesis unit or a dimethylether synthesis unit.

FIG. 1

**FIG. 2**

**FIG. 3**

**FIG. 4**

**FIG. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2850156
- US 2007703526 A
- WO 2007082089 A2
- WO 2008036902 A